# EUROPÄISCHE PATENTANMELDUNG

(11) **EP 2 589 305 A2**
(43) Veröffentlichungstag der Anmeldung: **08.05.2013**
(21) Anmeldenummer: 12183281.0
(22) Anmeldetag: 06.09.2012
(51) Int. Cl.: A24D 3/02, B65G 47/16

(54) **Verfahren und Vorrichtung zum Vereinzeln und Einlegen von Objekten in einen Materialstrang der Tabak verarbeitenden Industrie**

(30) Priorität: 01.11.2011 DE 102011085534
(71) Anmelder: HAUNI Maschinenbau AG, 21033 Hamburg (DE)
(72) Erfinder: Syrzisko, Frank, 21509 Glinde (DE); Punzius, Jörn, 22946 Trittau (DE); Hansch, Manuel, 21031 Hamburg (DE); Theivogt, Klaus, 23879 Mölln (DE); Krause, Matthias, 31675 Bückeburg (DE); Gäde, Hennes, 23847 Rethwisch (DE)
(74) Vertreter: Seemann, Ralph

(57) **Zusammenfassung**

Die Erfindung betrifft ein Verfahren zum Vereinzeln und Einlegen von Objekten (9) in wenigstens einen Materialstrang (1) der Tabak verarbeitenden Industrie, insbesondere einen Filterstrang. Die Erfindung betrifft weiter eine Vorrichtung (20, 40, 60) zum Vereinzeln und Einlegen von Objekten (9) in wenigstens einen Materialstrang (1) der Tabak verarbeitenden Industrie, insbesondere einen Filterstrang, umfassend ein Objektvorratsvolumen (22, 42, 62) und eine Übernahmevorrichtung (30, 50, 70) mit diskreten Objektaufnahmen (32, 52, 72) für Objekte (9), wobei eine Aufnahmestrecke (36, 56, 76) entlang des Förderwegs der Objekte (9) an der Übernahmevorrichtung (30, 50, 70) zur Aufnahme der Objekte (9) in den Objektaufnahmen (32, 52, 72) angeordnet ist, wobei die Übernahmevorrichtung (30, 50, 70) zum Einlegen von Objekten (9) in den Materialstrang (1) ausgebildet ist oder zusätzlich eine Einlegevorrichtung zum Einlegen von Objekten (9) in den Materialstrang (1) umfasst ist, die unmittelbar oder mittelbar in Förderrichtung der Objekte (9) stromabwärts der Übernahmevorrichtung (30, 50, 70) angeordnet ist. Schließlich betrifft die Erfindung eine Maschine der Tabak verarbeitenden Industrie, insbesondere Strangmaschine, sowie eine Verwendung.

Die erfindungsgemäße Vorrichtung (20, 40, 60) zeichnet sich dadurch aus, dass ein drehendes oder drehbares Beschleunigerrad (10, 10') zwischen dem Objektvorratsvolumen (22, 42, 62) und der Übernahmevorrichtung (30, 50, 70) angeordnet ist, das an seinem Umfang eine mit Saugluft (17) beaufschlagte oder beaufschlagbare Ringnut (11) aufweist, deren Breite nicht oder nur geringfügig größer ist als ein Durchmesser der Objekte (9).

## Beschreibung

Die Erfindung betrifft ein Verfahren zum Vereinzeln und Einlegen von Objekten in wenigstens einen Materialstrang der Tabak verarbeitenden Industrie, insbesondere einen Filterstrang. Die Erfindung betrifft weiter eine Vorrichtung zum Vereinzeln und Einlegen von Objekten in wenigstens einen Materialstrang der Tabak verarbeitenden Industrie, insbesondere einen Filterstrang, umfassend ein Objektvorratsvolumen und eine Übernahmevorrichtung mit diskreten Objektaufnahmen für Objekte, wobei eine Aufnahmestrecke entlang des Förderwegs der Objekte an der Übernahmevorrichtung zur Aufnahme der Objekte in den Objektaufnahmen angeordnet ist, wobei die Übernahmevorrichtung zum Einlegen von Objekten in den Materialstrang ausgebildet ist oder zusätzlich eine Einlegevorrichtung zum Einlegen von Objekten in den Materialstrang umfasst ist, die unmittelbar oder mittelbar in Förderrichtung der Objekte stromabwärts der Übernahmevorrichtung angeordnet ist. Schließlich betrifft die Erfindung eine Maschine der Tabak verarbeitenden Industrie, insbesondere Strangmaschine, sowie eine Verwendung.

Die Erfindung betrifft somit die Herstellung eines Materialstrangs, insbesondere eines Tabakstrangs oder Filterstrangs, für stabförmige Artikel der Tabak verarbeitenden Industrie, insbesondere für Filterzigaretten. Der zunächst endlose Tabakstrang oder Filterstrang wird nach seiner Herstellung in einzelne Tabakstäbe bzw. Filterstäbe abgelängt. Der Filterstrang bzw. die abgelängten Filterstäbe oder Tabakstäbe enthalten als wesentlichen Bestandteil ein oder mehrere Objekte, die die Rauch- oder Filtereigenschaften beeinflussen.

Im Falle von Filterstäben bzw. einem Filterstrang handelt es sich bei den Objekten insbesondere um Kapseln mit einer festen Hülle, die mit einer Flüssigkeit gefüllt sind. Die Flüssigkeit enthält in solchen Fällen üblicherweise Geschmacksstoffe oder Duftstoffe, beispielsweise Menthol. Zur Verwendung bricht ein Raucher die Kapsel vor dem Rauchen durch Druck auf den Filter auf und zündet die Zigarette anschließend an. Durch den Druck auf die Kapsel im Filter wird die Flüssigkeit freigesetzt, so dass sich das Aroma der Flüssigkeit entfaltet. Diese Vorgehensweise bietet ein besonders intensives oder frisches Geschmackserlebnis. Entsprechende Kapseln weisen üblicherweise einen Durchmesser von ca. 3 bis 3,5 mm auf, können aber auch kleiner sein.

Alternativ können im Rahmen der Erfindung als Objekte auch harte Objekte Verwendung finden, ebenso kleinere oder größere Partikel, beispielsweise Kugeln oder zylindrische Objekte aus Aktivkohle, Extrudaten oder anderen Filtermaterialien oder Zusätzen.

Eine gattungsgemäße Technik umfasst gemäß WO 2005/032286 A2 eine Einbringvorrichtung für Kapseln in einen Filtertowstreifen mit einem rotierenden Einlegerad. Das Einlegerad weist an seinem Umfang Aufnahmen für Kapseln auf, in denen die Kapseln nach dem Einlegen mit Saugluft gehalten werden. Bei der weiteren Rotation des Einlegerads dringt der Umfang des Einlegerads durchgängig in den Filtertowstreifen ein. Sobald in diesem Fall eine Kapsel in den Filtertowstreifen eintritt, wird die Saugluft abgeschaltet. So wird die Kapsel im Filtertowstreifen abgelegt und mit diesem weitertransportiert. Am Ort des Einlegerads erhält der Filtertowstreifen im Wesentlichen die Form eines "U", wobei das Einlegerad in die mittlere Aussparung bzw. in den Kanal des "U" eindringt. Anschließend erfolgt die Formung des Filterstrangs, bei der der Filtertowstreifen geschlossen, verdichtet und mit einem Umhüllungsstreifen umhüllt wird.

Die Förderung eines Filtertowstreifens und eines daraus geformten Filterstrangs in einer Filterstrangmaschine erfolgt kontinuierlich. Die Produktionsgeschwindigkeit und die Fördergeschwindigkeit des Filtertowstreifens und des daraus gebildeten Filterstrangs sind dabei durch die maximale Geschwindigkeit der Einbringvorrichtung für in den Filterstrang einzulegende Objekte begrenzt. Diese Höchstgeschwindigkeit beträgt derzeit ca. 100 m/min. Damit ist die Produktionsgeschwindigkeit deutlich niedriger als bei herkömmlichen Filtersträngen, in die keine Kapseln eingelegt werden.

Dies liegt daran, dass die Geschwindigkeitsdifferenz zwischen dem Einlegerad und den Kapseln unmittelbar vor dem Aufnehmen durch das Einlegerad zu groß ist. Entweder findet nicht jede Kapsel eine Aufnahmekammer im Einlegerad oder eine Kapsel wird zerstört, weil sie noch nicht ganz in der Aufnahmekammer verschwunden ist und an der Speicherwand zerdrückt wird.

Weiterhin müssen während des Anfahrens bei den bekannten Systemen die mit Kapseln bestückten Filterstäbe solange ausgeworfen werden, bis Filterstrang und Einlegerad synchronisiert sind.

Weitere bekannte Systeme führen vorher vereinzelte Objekte den jeweiligen Bohrungen des Einlegerads zu. Hierbei ist die Einlegegeschwindigkeit dadurch begrenzt, dass die Vereinzelungsmechanismen an ihrer dynamischen Grenze angelangt sind und die Objekte beim Übergeben an ein Einlegerad zerstört werden.

Ein demgegenüber verbessertes Verfahren und eine verbesserte Vorrichtung zum Einlegen von Objekten in einen Materialstrang der Tabak verarbeitenden Industrie ist in der deutschen Patentanmeldung DE 10 2011 017 615.2 der Anmelderin offenbart, deren Offenbarungsgehalt vollinhaltlich in der vorliegenden Patentanmeldung aufgenommen sein soll. Darin werden Objekte aus einem Objektvorrat entnommen und mittels Ringdüsen in Richtung einer Förderrichtung in einer Aufnahmestrecke in einen geraden Abschnitt eines über Umlenkrollen geführten Einlegebands mit in wenigstens einer Reihe hintereinander angeordneten Aufnahmen für die Objekte beschleunigt, um eine Geschwindigkeitsdifferenz zwischen den Aufnahmen des Einlegebands und den Objekten zu verringern. Die Objekte werden entlang der Aufnahmestrecke in die Aufnahmen aufgenommen, mittels Saugluft in den Aufnahmen des Einlegebands gehalten und zu einer Einlegeposition am Materialstrang gefördert und dort in den Materialstrang eingelegt. Auf diese Weise wird die Geschwindigkeitsdifferenz zwischen den Objekten und den Objektaufnahmen im Einlegeband verringert, so dass diese schonender als bisher möglich in die Objektaufnahmen aufgenommen werden.

Gegenüber diesem Stand der Technik besteht die Aufgabe der vorliegenden Erfindung darin, eine alternative Möglichkeit zur Vereinzelung und zum Einlegen von Objekten in einen Materialstrang der Tabak verarbeitenden Industrie zur Verfügung zu stellen, mit der eine schonende und effiziente Vereinzelung der Objekte möglich ist.

Diese Aufgabe wird durch ein Verfahren zum Vereinzeln und Einlegen von Objekten in wenigstens einen Materialstrang der Tabak verarbeitenden Industrie, insbesondere einen Filterstrang, gelöst, wobei Objekte aus einem Objektvorratsvolumen in eine mit Saugluft beaufschlagte Ringnut am äußeren Umfang eines um eine Rotationsachse rotierenden Beschleunigerrads gelangen, wobei die Objekte, die durch die Saugluft in der Ringnut des Beschleunigerrads gehalten werden, im Laufe der Rotation des Beschleunigerrads beschleunigt werden und auf eine Übernahmevorrichtung gefördert werden, die diskrete Objektaufnahmen für die Objekte aufweist, wobei einige der Objekte in einer Aufnahmestrecke entlang des Förderwegs der Objekte in den Objektaufnahmen der Übernahmevorrichtung aufgenommen, nach Verlassen der Aufnahmestrecke in den Objektaufnahmen weitergefördert und anschließend durch die Übernahmevorrichtung oder eine in Förderrichtung der Objekte stromabwärts sich anschließende Einlegevorrichtung in einen Materialstrang eingelegt werden, wobei überschüssige Objekte, die in der Aufnahmestrecke nicht in einer Objektaufnahme der Übernahmevorrichtung aufgenommen worden sind, nach Verlassen der Aufnahmestrecke abgeführt und/oder in das Objektvorratsvolumen zurückgeführt werden.

Die Verwendung eines rotierenden Beschleunigerrads mit einer wenigstens abschnittsweise mit Saugluft beaufschlagten Ringnut am äußeren Umfang hat den Vorteil, dass die Objekte aus dem Objektvorratsvolumen direkt in die passende umlaufende Ringnut eindringen können, mittels Saugluft beweglich in der Ringnut gehalten und somit auf schonende Weise durch das Beschleunigerrad mitgenommen und beschleunigt werden. Mit dem erfindungsgemäßen Verfahren sind Strangproduktionsgeschwindigkeiten erreichbar für Stränge mit eingelegten Objekten, die mit denen für Materialstränge ohne eingelegte Objekte vergleichbar sind.

Da die Ringnut umlaufend ist, gibt es in der Ringnut keinerlei querverlaufende Kanten, an denen die Objekte beschädigt werden können. Die Ringnut ist mit Saugluft beaufschlagt, so dass die Objekte in der Ringnut angesaugt werden und somit von dem rotierenden Beschleunigerrad mitgenommen werden. Im Verlaufe der Drehung gleicht sich dabei die Geschwindigkeit der Objekte in der Ringnut an die Umfangsgeschwindigkeit des Beschleunigerrads an. Auf diese Weise kann der gesamte Abschnitt der Ringnut, der sich zu einem Zeitpunkt im Objektvorratsvolumen oder in Verbindung mit dem Objektvorratsvolumen befindet, mit Objekten befüllt werden. Dies bedeutet auch, dass ein Überschuss an Objekten in der Ringnut in Richtung auf die Übernahmevorrichtung gefördert wird, d.h. es werden mehr Objekte zur Übernahmevorrichtung gefördert, als Objektaufnahmen an der Übernahmevorrichtung vorhanden sind. Dies erhöht die Wahrscheinlichkeit, dass jede Objektaufnahme der Übernahmevorrichtung mit einem Objekt gefüllt wird und minimiert die Wahrscheinlichkeit, dass Objektaufnahmen der Übernahmevorrichtung leer bleiben, was im weiteren Verfahrensverlauf zu einem Ausschuss entsprechend nicht befüllter Filterstäbe oder Zigarettenstäbe führt.

Die Objekte bilden eine mehr oder weniger geschlossene Objektkette, d.h. es liegt Objekt an Objekt, wobei aufgrund des dynamischen Vorgangs auch Lücken zwischen Objekten entstehen können. Diese Objektketten werden in einem Kanal geführt. Weiterhin werden aufgrund der Bildung der Objektketten mehr Objekte an der Übernahmevorrichtung vorbeigeführt, als von der Übernahmevorrichtung abgenommen werden können. Die überschüssigen Objekte, die nicht aufgenommen wurden, werden aufgefangen und/oder in das Objektvorratsvolumen zurückgeführt.

Vorzugsweise werden die Objekte auf dem Beschleunigerrad auf eine Geschwindigkeit beschleunigt, die die Fördergeschwindigkeit der Übernahmevorrichtung übersteigt. Auch eine Untergeschwindigkeit kann erfindungsgemäß eingestellt werden, solange die Geschwindigkeitsdifferenz dazu geeignet ist, dass die Objektaufnahmen der Übernahmevorrichtung mit Objekten gefüllt werden. Die Differenzgeschwindigkeit des Beschleunigerrads, bezogen auf die Fördergeschwindigkeit der Übernahmevorrichtung, beträgt vorzugsweise zwischen -30% und +30%, insbesondere vorzugsweise zwischen -15% und +15%.

Bei dem Verfahren wird vorteilhafterweise ein Überschuss an Objekten zur Übernahmevorrichtung gefördert. Dies erhöht die Wahrscheinlichkeit, dass jede Objektaufnahme der Übernahmevorrichtung mit einem Objekt gefüllt wird.

In einer bevorzugten Weiterbildung ist vorgesehen, dass die überschüssigen Objekte mittels eines zweiten Beschleunigerrades mit einer mit Saugluft beaufschlagten Ringnut, das sich an die Übernahmevorrichtung anschließt, zum Objektvorratsvolumen zurückgeführt wird. Auf diese Weise wird das erfindungsgemäße Prinzip der Beschleunigung mittels eines Beschleunigungsrades mit mit Saugluft beaufschlagter Ringnut zweimal angewendet. So ergibt sich ein Kreislauf von Objekten, die, insbesondere im Überschuss, der Übernahmevorrichtung zugeführt werden.

Vorteilhafterweise wird bei dem Beschleunigerrad die Saugluft entlang eines Teils des Umfangs in Rotationsrichtung abgeschaltet, insbesondere zwischen einem Übergabepunkt an die Übernahmevorrichtung und einem Punkt, an dem die Ringnut in das Objektvorratsvolumen eindringt. Auf diese Weise wird einerseits Saugluft gespart und andererseits verhindert, dass die Objekte beim Übergang von dem Beschleunigerrad zu der Übernahmevorrichtung unter dem Einfluss der Saugluft am Beschleunigerrad zurückgehalten werden. Diese Maßnahme verbessert den störungsfreien Ablauf der Vereinzelung.

Die der Erfindung zugrunde liegende Aufgabe wird auch durch eine Vorrichtung zum Vereinzeln und Einlegen von Objekten in wenigstens einen Materialstrang der Tabak verarbeitenden Industrie, insbesondere einen Filterstrang, umfassend ein Objektvorratsvolumen und eine Übernahmevorrichtung mit diskreten Objektaufnahmen für Objekte, wobei eine Aufnahmestrecke entlang des Förderwegs der Objekte an der Übernahmevorrichtung zur Aufnahme der Objekte in den Objektaufnahmen angeordnet ist, wobei die Übernahmevorrichtung zum Einlegen von Objekten in den Materialstrang ausgebildet ist oder zusätzlich eine Einlegevorrichtung zum Einlegen von Objekten in den Materialstrang umfasst ist, die unmittelbar oder mittelbar in Förderrichtung der Objekte stromabwärts der Übernahmevorrichtung angeordnet ist, gelöst, wobei ein drehendes oder drehbares Beschleunigerrad zwischen dem Objektvorratsvolumen und der Übernahmevorrichtung angeordnet ist, das an seinem Umfang eine mit Saugluft beaufschlagte oder beaufschlagbare Ringnut aufweist, deren Breite nicht oder nur geringfügig größer ist als ein Durchmesser der Objekte.

Wie bei dem zuvor beschriebenen erfindungsgemäßen Verfahren beruht auch die erfindungsgemäße Vorrichtung auf dem schonenden Beschleunigungsprinzip des Beschleunigerrads mit der mit Saugluft beaufschlagten Ringnut. Damit wird der in bisherigen bekannten Systemen auftretende Effekt vermieden, dass Objekte, die mit undefinierter Geschwindigkeit einem Einlegerad mit diskreten Objektaufnahmen zugeführt werden, eine große Geschwindigkeitsdifferenz zwischen den Objekten einerseits und dem Einlegerad andererseits unmittelbar vor den Aufnahmen aufweisen, so dass nicht jede Kapsel eine Aufnahmekammer bzw. Objektaufnahme im Einlegerad findet oder Objekte zerstört werden, weil sie noch nicht ganz in der Objektaufnahme verschwunden sind und an der Wand des Objektvorrats zerdrückt werden. Daher wird mit der erfindungsgemäßen Vorrichtung die begrenzte Produktionsgeschwindigkeit solcher Systeme überstiegen.

Gemäß dem vorliegenden erfindungsgemäßen Verfahren und der erfindungsgemäßen Vorrichtung werden die Objekte somit mittels eines Beschleunigerrads aus einem Objektvorratsvolumen entnommen und schonend auf annähernde Stranggeschwindigkeit beschleunigt. Die vorbeschleunigten Objekte werden an einer Übernahmevorrichtung, die mit geeigneten Objektaufnahmen ausgestattet ist, vorbeigeführt. In der Ringnut des Beschleunigerrads bildet sich die oben bereits beschriebene Objektkette.

Vorzugsweise entspricht die Ringnut in ihrer Tiefe einem Durchmesser eines Objekts. Dadurch sind die Objekte in der Ringnut auf dem Beschleunigerrad geschützt.

Weiterhin entspricht die Breite des Objektvorratsvolumens einem Durchmesser eines Objekts, wobei insbesondere die Seitenwände des Objektvorratsvolumens mit den Seitenwänden der Ringnut fluchten. Auf diese Weise gelangen die Objekte unter Einwirkung der Saugluft und insbesondere der Schwerkraft ohne weitere Hindernisse direkt in die Ringnut des Beschleunigerrads, wodurch eine schonende Behandlung der Objekte erzielt wird.

Die Übernahmevorrichtung ist vorteilhafterweise als Übernahmeband oder Einlegeband oder als Übernahmerad oder Einlegerad ausgebildet. Das jeweilige Übernahmeband oder Einlegeband, Übernahmerad oder Einlegerad weist jeweils diskrete Objektaufnahmen auf, in denen insbesondere die Objekte vollständig aufgenommen werden.

In einer vorteilhaften Ausführungsform schließt sich an die Übernahmevorrichtung in Förderrichtung der Objekte ein zweites Beschleunigerrad an, mittels dessen überschüssige Objekte in das Objektvorratsvolumen rückführbar sind. Dieses zweite Beschleunigerrad empfängt die von der Übernahmevorrichtung nicht aufgenommenen Objekte und beschleunigt sie ein zweites Mal, wobei sie nach dem Beschleunigen zurück in das Objektvorratsvolumen gelangen.

Vorzugsweise weist oder weisen das Beschleunigerrad oder die Beschleunigerräder zwei Scheiben auf, zwischen denen ein Spalt und/oder radial ausgerichtete oder gegenüber einer Radialen geneigte Kanäle für Saugluft ausgebildet ist und/oder sind, wobei die Scheiben an ihrem Umfang jeweils einen seitlichen Teil der Ringnut aufweisen, wobei insbesondere ein in den Spalt zwischen den Scheiben eingreifender stillstehender Steuerkörper zur Abschaltung der Saugluft und/oder zur Entnahme der Objekte aus der Ringnut angeordnet ist. Mittels der Ausführungsform mit den beiden Scheiben ist eine Versorgung des Spaltes in der Ringnut mit Saugluft über die gesamte Länge der Ringnut gewährleistet, wobei die Saugluft beispielsweise im Zentrum des Beschleunigerrads einsetzbar ist. Wenn wenigstens in einem an die Ringnut angrenzenden Bereich Kanäle für die Saugluft angeordnet sind, die radial oder mit einer Neigung gegenüber der Radialen nach innen führen, wird vorteilhafterweise das Mitnahmeverhalten der Objekte verbessert, unter anderem, indem eine Verwirbelung der Saugluft im Spalt und daraus in Umfangsrichtung entstehende Unterschiede in der Saug- und Haltekraft verhindert werden. An die Kanäle kann sich innenliegend ein Spalt anschließen, über den alle Kanäle mit Vakuum bzw. Unterdruck versorgt werden.

In einer alternativen Ausführungsform, die auch in Kombination mit einem weiteren Beschleunigerrad der ersten Ausführungsform verwendet werden kann, ist vorgesehen, dass das Beschleunigerrad an einer oder beiden Seitenflächen Öffnungen aufweist, die mit einer entsprechenden stillstehenden, insbesondere ringabschnittförmigen, Saugluftdüse fluchten und im Inneren des Beschleunigerrads mit der Ringnut verbunden sind. Auf diese Weise wird die Saugluft über Öffnungen, die eine Reihe von kleinen Öffnungen oder von langlochförmigen Öffnungen mit gleicher oder variierender Länge ausgebildet sind, von der Seite her angelegt, wobei die Ausdehnung der Saugluftdüse dafür bestimmend ist, in welchem Abschnitt Saugluft anliegt und in welchem Abschnitt keine Saugluft anliegt. Diese seitlichen Öffnungen münden in einen durchlaufenden Kanal, der durchlaufend mit der Ringnut verbunden ist, so dass ebenfalls eine gleichmäßige Beaufschlagung der Ringnut mit Saugluft gewährleistet ist.

Vorzugsweise ist eine Seitenwand des Objektvorratsvolumens am Austritt des Beschleunigerrads aus dem Objektvorratsvolumen abschnittsweise keilförmig zum Abstreifen von außerhalb der Ringnut mitgenommenen Objekten ausgebildet, wobei die Seitenwand an der vom Beschleunigerrad abgewandten Seite des keilförmigen Abschnitts eine Ausbuchtung aufweist, mittels der die abgestreiften Objekte in das Objektvorratsvolumen zurück gelenkt werden oder lenkbar sind, wobei insbesondere die Ausbuchtung in ihrem Zentrum eine inselförmige Sperrfläche aufweist, so dass um die Sperrfläche herum ein gekrümmter Kanal für die Objekte in der Ausbuchtung ausgebildet ist. Die Ausbuchtung dient dazu, die Objekte, die vom Beschleunigerrad zwar angezogen worden sind und auch mit beschleunigt worden sind, die aber nicht in die Ringnut eingedrungen sind, in das Objektvorratsvolumen zurückzuführen.

Das Abtrennen dieser Objekte von den Objekten in der Ringnut erfolgt durch den keilförmigen Abschnitt der Seitenwand, der auch als Abstreifkeil bezeichnet wird, und der eine schonende Richtungsänderung für diese Objekte bewirkt. Die Ausbuchtung hat eine gekrümmte Wand, die die Bewegungsrichtung dieser auf ihr abrollenden oder gleitenden Objekte umkehrt, so dass sie zum Objektvorratsvolumen zurückgelenkt werden. Wenn außerdem eine inselförmige Sperrfläche im Inneren der Ausbuchtung ausgebildet ist, so dass sich ein gekrümmter Kanal für die Objekte in der Ausbuchtung ausbildet, ist außerdem ein noch ruhigerer Fluss der Objekte gewährleistet, da diese in einem kontinuierlichen Objektstrom mit noch besser definierter Richtung zum Objektvorratsvolumen zurückgeführt werden. Insbesondere ist der Querschnitt des Kanals im Verlaufe des Kanals im Wesentlichen konstant, so dass sich keine Staus bilden können.

In einer vorteilhaften Weiterbildung ist vorgesehen, dass das Beschleunigerrad zwischen dem Objektvorratsvolumen und einer Übergabeposition zur Übernahmevorrichtung in einem Gehäuse angeordnet ist, das so dicht am Umfang des Beschleunigerrads angeordnet ist, dass Objekte die Ringnut nicht verlassen können. Auf diese Weise werden die so genannten Objektketten auch im weiteren Förderverlauf beibehalten, was zu der effektiven Bestückung von Objektaufnahmen der Übernahmevorrichtung mit Objekten führt.

Vorzugsweise ist die Geschwindigkeit des Beschleunigerrads oder der Beschleunigerräder regelbar. Auf diese Weise kann die Differenzgeschwindigkeit zwischen Beschleunigerrad und Übernahmevorrichtung an unterschiedliche Produktionsgeschwindigkeiten, Objekttypen usw. individuell angepasst werden, um eine besonders effiziente Verfahrensführung sicherzustellen.

Schließlich wird die der Erfindung zugrunde liegende Aufgabe auch durch eine Maschine der Tabak verarbeitenden Industrie, insbesondere Strangmaschine, insbesondere Filterstrangmaschine, mit einer oder mehreren erfindungsgemäßen, zuvor beschriebenen Vorrichtungen für einen oder mehrere Materialstränge, insbesondere Filterstränge, gelöst.

Außerdem wird die der Erfindung zugrunde liegende Aufgabe auch durch eine Verwendung eines Beschleunigerrads mit einer mit Saugluft beaufschlagbaren Ringnut an ihrem Umfang zum Beschleunigen von Objekten aus einem Objektvorratsvolumen und zum Fördern eines Überschusses an Objekten, insbesondere unter Bildung einer Objektkette, zu einer Übernahmevorrichtung mit diskreten Aufnahmen für Objekte gelöst. Diese Verwendung eines Beschleunigerrads hat ebenfalls die beschriebenen Vorteile, nämlich, dass insbesondere eine Objektkette, also ein Überschuss von Objekten bezüglich der verfügbaren Objektaufnahmen an die Übernahmevorrichtung, hergestellt wird und mit einer Differenzgeschwindigkeit zur Übernahmevorrichtung förderbar ist.

Die zu den einzelnen Erfindungsgegenständen, d.h. dem Verfahren, der Vorrichtung, der Maschine und der Verwendung genannten Merkmale, Vorteile und Eigenschaften gelten ohne Einschränkung auch für die jeweils anderen Erfindungsgegenstände, die sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a), b): Schnittdarstellungen durch eine erste Ausführungsform eines erfindungsgemäßen Beschleunigerrads,
- Fig. 2a), b): Schnittdarstellung und eine Seitenansicht einer zweiten Ausführungsform eines erfindungsgemäßen Beschleunigerrads,
- Fig. 3: eine schematische Darstellung einer ersten erfindungsgemäßen Vereinzelungs- und Einlegevorrichtung,
- Fig. 4: eine schematische Darstellung einer zweiten Ausführungsform einer erfindungsgemäßen Vereinzelungs- und Einlegevorrichtung,
- Fig. 5: eine schematische Darstellung einer dritten Ausführungsform einer erfindungsgemäßen Vereinzelungs- und Einlegevorrichtung und
- Fig. 6: eine schematische Darstellung eines erfindungsgemäßen Beschleunigerrads.

In den Zeichnungen sind jeweils gleiche oder gleichartige Elemente und/oder Teile mit denselben Bezugsziffern versehen, so dass von einer erneuten Vorstellung jeweils abgesehen wird.

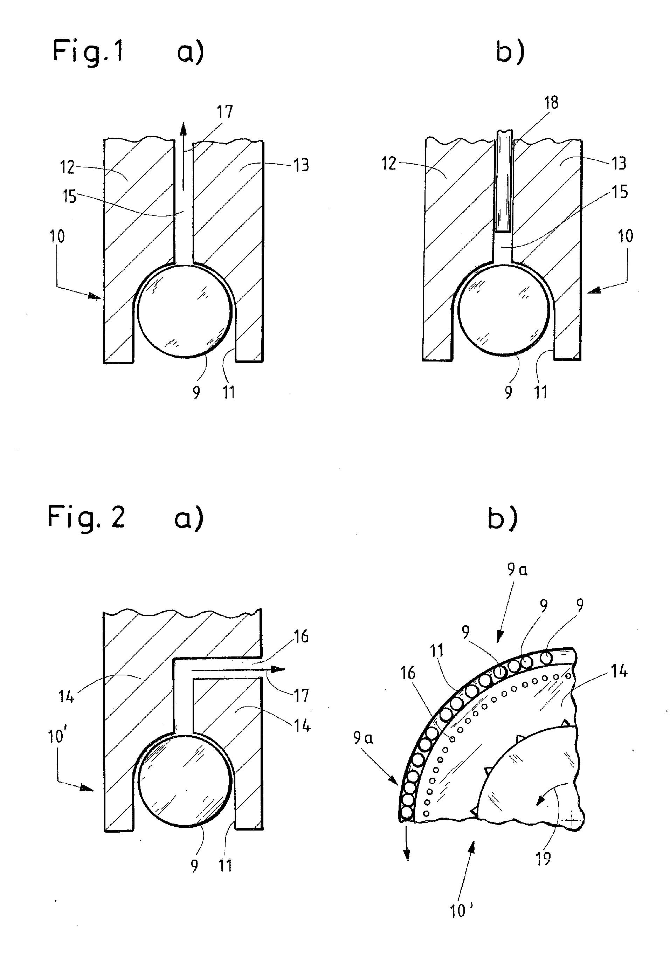

Fig. 1a) zeigt schematisch in einem Ausschnitt eine Querschnittsdarstellung durch den äußeren Umfang eines erfindungsgemäßen Beschleunigerrads 10 in einer ersten Ausführungsform. Dieses Beschleunigerrad 10 weist zwei Scheiben 12, 13 auf, zwischen denen ein Spalt 15 angeordnet ist, der mit Saugluft 17 beaufschlagt ist. Der äußere Umfang der beiden Scheiben 12, 13 des Beschleunigerrads 10 weist an den jeweiligen Innenseiten eine Aussparung auf, die zusammen eine Ringnut 11 ergibt, die einen umfänglich umlaufenden Sitz für Objekte 9 darstellt.

Wie in Fig. 1a) dargestellt, entspricht die Breite und die Tiefe der Ringnut 11 im Wesentlichen dem Durchmesser des Objektes 9. Das Objekt 9 wird durch die Saugluft 17 in der Ringnut 11 gehalten, kann sich in der Umfangsrichtung jedoch frei bewegen.

In Fig. 1b) ist eine Situation dargestellt, in der ein Steuerkörper 18 im Spalt 15 angeordnet ist und die Saugluft 17 abschaltet. Dies ist beispielsweise die Situation kurz vor einer Übergabe zu einer Übernahmevorrichtung. Der Steuerkörper 18 ist in der Vereinzelungsvorrichtung ortsfest angeordnet.

In Fig. 2a) und b) ist ein zweites Ausführungsbeispiel eines erfindungsgemäßen Beschleunigerrads 10' dargestellt. Dieses Beschleunigerrad 10' verfügt über einen Radkörper 14, der eine Bohrung 16 zu einer Seite aufweist, die in der Mitte des Radkörpers 14 nach außen hin abknickt und somit eine seitliche Bohrung 16 mit der Ringnut 11 verbindet. Die Saugluft 17 wird dementsprechend an der seitlichen Öffnung 16 angelegt.

In Fig. 2b) ist eine seitliche schematische Darstellung eines entsprechenden Beschleunigerrads 10' aus Fig. 2a) dargestellt. Die Drehrichtung ist mit einem Pfeil und der Bezugsziffer 19 gekennzeichnet. Am äußeren Umfang ist schematisch die Ringnut 11 gekennzeichnet, in der eine Objektkette mit Objekten 9 enthalten ist, die aus einem nicht dargestellten Objektvorratsvolumen in die Ringnut 11 eingedrungen ist. Im Radkörper 14 sind seitlich die Bohrungen 16 dargestellt, die in einen Spalt einmünden, der Saugluft 17 gleichmäßig in der Ringnut 11 verteilt. Deutlich ist in Fig. 2b) zu erkennen, dass sich die Objekte 9 in der Ringnut 11 zu einer mehr oder weniger geschlossenen Objektkette 9a aufreihen, die gemeinsam beschleunigt wird. Insbesondere weisen die Objekte 9 am Ende der Beschleunigungsstrecke in der Ringnut 11 im Wesentlichen die Form einer geschlossenen Objektkette 9a auf.

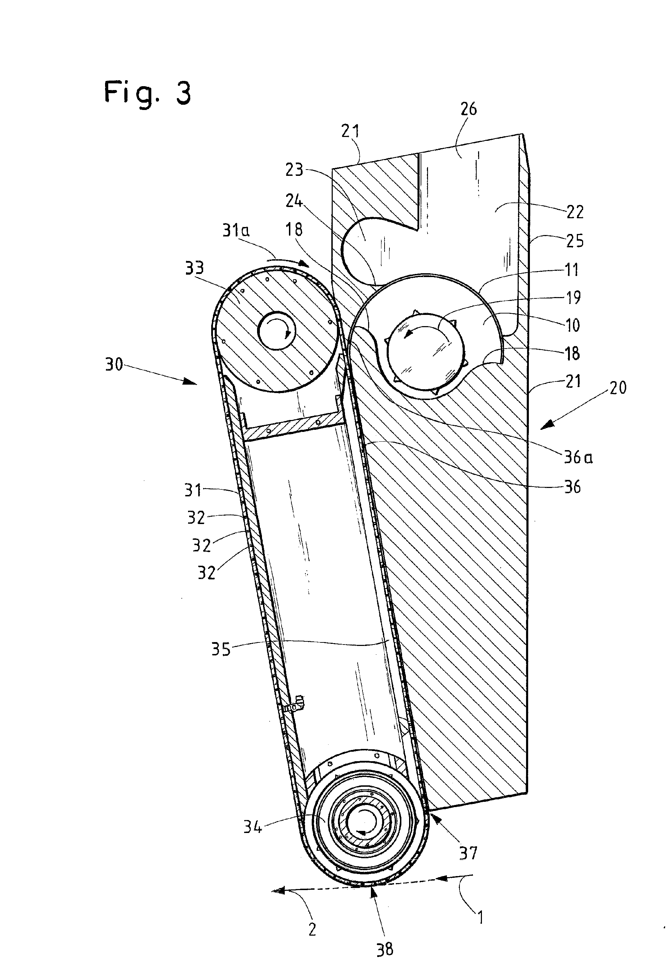

In Fig. 3 ist ein erstes Ausführungsbeispiel einer erfindungsgemäßen Vereinzelungs- und Einlegevorrichtung 20 schematisch von der Seite dargestellt. Diese Vereinzelungs- und Einlegevorrichtung 20 weist eine Vereinzelungsvorrichtung 21 und eine Übernahmevorrichtung 30 auf. Die Vereinzelungsvorrichtung 21 weist ein Objektvorratsvolumen 22 mit der Breite einer Objektlage auf. Es handelt sich somit um eine so genannte "Single-Layer"-Vorrichtung. Das bedeutet, dass die Objekte in einer einzigen Lage angeordnet sind, weil das Objektvorratsvolumen 22 in der Breite auf ihren Durchmesser begrenzt ist.

Das Objektvorratsvolumen 22 steht in Kontakt mit einem Abschnitt des Umfangs eines Beschleunigerrads 10 mit einer umlaufenden Ringnut 11, das sich in Pfeilrichtung bzw. Drehrichtung 19 dreht und dabei Objekte aus dem Objektvorratsvolumen 22 aufnimmt und in Drehrichtung 19 beschleunigt. Das Objektvorratsvolumen 22 wird von dem Gehäuse 25 der Vereinzelungsvorrichtung 21 begrenzt. In Drehrichtung 19 des Beschleunigerrads 10 stromabwärts befindet sich ein Abstreifkeil 24, also ein keilförmig geformter Abschnitt des Gehäuses 25, der dazu dient, die Bewegungsrichtung von Objekten, die vom Beschleunigerrad 10 mitbeschleunigt worden sind, jedoch nicht in die Ringnut 11 gelangt sind, schonend zu ändern. Dazu werden die Objekte von der Oberkante des Abstreifkeils 24 von dem Beschleunigerrad 10 abgestreift und an der gekrümmten Seitenfläche einer Ausbuchtung 23 umgelenkt, so dass sie wiederum in Richtung des Objektvorratsvolumens 22 zurückgeführt werden. So verbleibt ein Großteil der Objekte im Objektvorratsvolumen 22, wobei durch einen oberen Einlass 26 weitere Objekte in das Objektvorratsvolumen 22 nachfüllbar sind.

Stromabwärts in Drehrichtung 19 des Beschleunigerrads 10 dichtet das Gehäuse 25 die Ringnut 11 des Beschleunigerrads 10 nach außen ab. Die Objektkette in der Ringnut 11 des Beschleunigerrads wird daher mit dem Beschleunigerrad 10 weiter durch eine Transferstrecke 36a zu einer Aufnahmestrecke 36 geführt. In der Transferstrecke 36a befinden sich die Objekte weiterhin in der Ringnut 11 des Beschleunigerrads 10. Beim Übergang aus der Transferstrecke 36a zur Aufnahmestrecke 36 der Übernahmevorrichtung befindet sich ein weiterer, nicht im Detail wiedergegebener Abstreifkeil, der dafür sorgt, dass die Objekte der Objektkette aus der Ringnut 11 des Beschleunigers 10 in die Aufnahmestrecke 36 aufgenommen werden.

Die Aufnahmestrecke 36 ist ein Teil der Übernahmevorrichtung 30, die in Fig. 3 als Einlegeband 31 ausgebildet ist. Das Einlegeband 31, das eine oder mehrere Reihen von Objektaufnahmen 32 aufweist, wird in einer Förderrichtung 31 a bewegt und bewegt sich damit parallel zu den Objekten der Objektkette in der Aufnahmestrecke, allerdings gegebenenfalls mit einer gewissen Differenzgeschwindigkeit, die sich im Verlauf der Parallelführung in der Aufnahmestrecke 36 durch Reibung auch ändern kann.

Entlang der Aufnahmestrecke 36 ist auf der Innenseite des Einlegebandes 31 eine Unterdruckzone bzw. ein Unterdruckbereich 35 angeordnet, in dem die Objektaufnahmen 32 von innen mit Saugluft beaufschlagt werden, so dass Objekte, die in die Objektaufnahmen 32 gelangt sind, darin gehalten werden. Der Unterdruckbereich 35 erstreckt sich über die gesamte Länge der Aufnahmestrecke 36 bis hin zur Einlegezone 38, in der die Objekte aus den Objektaufnahmen 32 in einen Materialstrang 1 eingelegt werden. Der weitergeförderte Materialstrang mit eingelegten Objekten weist dann das Bezugszeichen 2 auf. Die Förderrichtung des Materialstrangs 1, 2 ist mit Pfeilen angegeben.

Das Einlegeband 31 wird über eine obere Umlenkrolle 33 und eine untere Umlenkrolle 34 geführt, deren Rotationsrichtungen ebenfalls dargestellt sind. Die untere Umlenkrolle 34 ist gleichzeitig zum Einlegen der Objekte aus den Objektaufnahmen 32 des Einlegebands 31 in den Materialstrang 1 ausgebildet. Dieser Vorgang ist in der deutschen Patentanmeldung Nr. DE 10 2011 017 615.2 der Anmelderin näher ausgeführt, deren Offenbarungsgehalt vollinhaltlich in der vorliegenden Patentanmeldung aufgenommen sein soll.

Durch das Bilden einer Objektkette in der Ringnut 11 des Beschleunigerrads 10 und der Übergabe der beschleunigten Objektkette in die Aufnahmestrecke 36 des Einlegebands 31 wird ein Überschuss an Objekten über eine längere Aufnahmestrecke 36 an dem Einlegeband 31 vorbei geführt, so dass mit großer Wahrscheinlichkeit sämtliche Objektaufnahmen 32 des Einlegebands 31 mit Objekten gefüllt werden. Da die Differenzgeschwindigkeit im Vergleich zum Stand der Technik begrenzt ist, erfolgt die Aufnahme der Objekte in den Objektaufnahmen auf schonende Weise. Die überschüssigen Objekte werden am Ende der Aufnahmestrecke 37 ausgestoßen und aufgefangen und gegebenenfalls in das Objektvorratsvolumen 22 zurückgeführt.

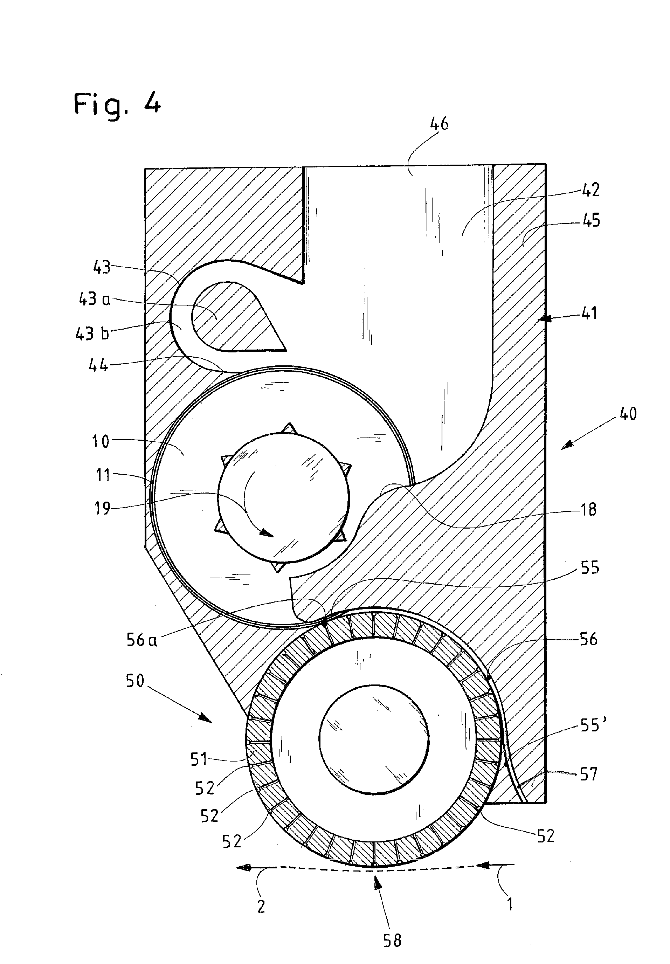

In Fig. 4 ist ein zweites Ausführungsbeispiel einer erfindungsgemäßen Vereinzelungs- und Einlegevorrichtung 40 gezeigt. Der obere Teil, nämlich die Vereinzelungsvorrichtung 41 ist ähnlich ausgestaltet wie diejenige aus Fig. 3, wobei die Vereinzelungsvorrichtung 41 wiederum ein Objektvorratsvolumen 42 mit einem oberen Einlass 46, einem Abstreifkeil 44 und einer Ausbuchtung 43 aufweist, wobei das Objektvorratsvolumen 42 mit einem Teil des Umfangs eines Beschleunigers 10 mit einer Ringnut 11, das sich in Drehrichtung 19 dreht, in Verbindung steht. Die Ausbuchtung 43 verfügt in diesem Fall über eine inselförmige Sperrfläche 43a, die einen gekrümmten Kanal 43b definiert, wodurch ein Objektstrom aus überschüssigen Objekten auf sehr geregelte Weise zurück in das Objektvorratsvolumen 42 gebracht wird.

Ein Teil des Gehäuses 45 bildet wiederum einen Steuerkörper 18, der über einen bestimmten Abschnitt des Umfangs des Beschleunigerrads 10 die Saugluft an der Ringnut 11 abschaltet.

Die Transferstrecke 56a erstreckt sich in etwa von dem Abstreifkeil 44 bis zu der stromabwärts angeordneten Übernahmevorrichtung 50, die in diesem Fall als ein Einlegerad 51 ausgebildet ist. Die Länge der Transferstrecke 56 hängt von den geometrischen Verhältnissen in der Vorrichtung ab und ist in dem vorliegenden Ausführungsbeispiel über einen Bereich von ca. 170° des Umfangs des Beschleunigerrads 10 ausgebildet.

Beim Übergang von der Transferstrecke 56a zur Aufnahmestrecke 56 entlang eines Teils des Umfangs des Einlegerads 51 befindet sich ein Abstreifkeil 55, der dafür sorgt, dass die Objekte der Objektkette in der Ringnut 11 des Beschleunigerrads 10 nicht in der Ringnut 11 verbleiben, sondern in die als Kanal ausgebildete Aufnahmestrecke 56 umgelenkt werden. In der Aufnahmestrecke 56 werden die Objekte der Objektkette mit einer Differenzgeschwindigkeit an dem Einlegerad 51 vorbei geführt, das diskrete Objektaufnahmen 52 an seinem Umfang aufweist, die jeweils mit Saugluft beaufschlagbar sind. Durch diese Parallelführung mit Objektüberschuss und gegebenenfalls einer Differenzgeschwindigkeit wird die Wahrscheinlichkeit, dass einzelne Objektaufnahmen 52 unbesetzt bleiben, minimiert.

Am Ende der Aufnahmestrecke 56 streift ein Abstreifkeil 55' die nicht aufgenommenen Objekte ab und lenkt sie in einen Abführkanal 57 um, aus dem diese austreten und abgeführt, aufgefangen und gegebenenfalls in das Objektvorratsvolumen 42 zurückgeführt werden.

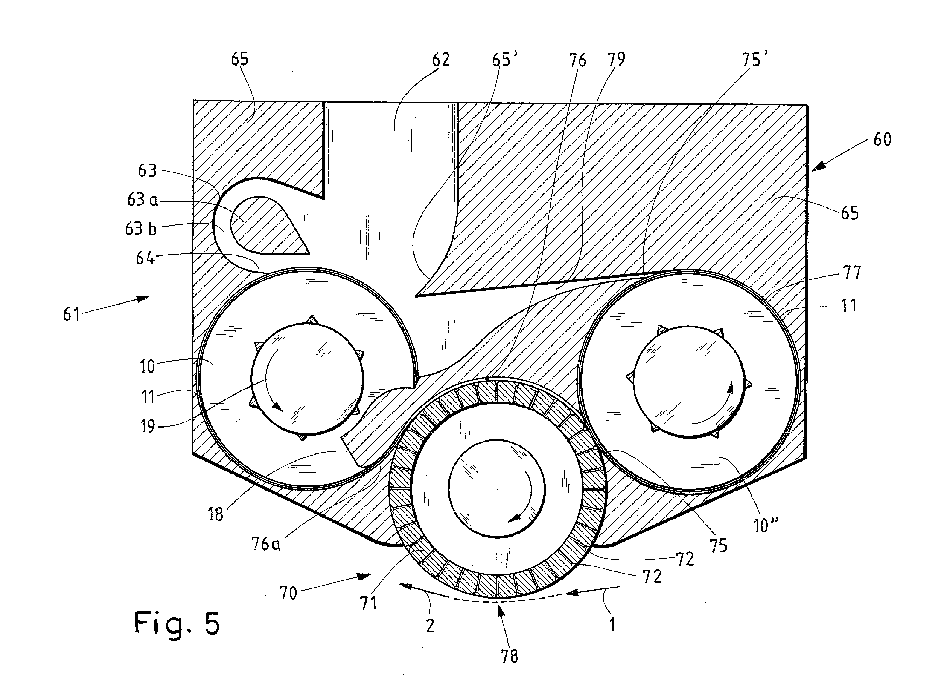

Fig. 5 zeigt schematisch eine dritte Ausführungsform einer erfindungsgemäßen Vereinzelungs- und Einlegevorrichtung 60, die im oberen und linken Teil eine erfindungsgemäße Vereinzelungsvorrichtung 61 mit einem Beschleunigerrad 10 empfängt, wobei in einem Gehäuse 65 wiederum ein Objektvorratsvolumen 62 mit einem Abstreifkeil 64, einer Ausbuchtung 63 mit inselförmiger Sperrfläche 63a und gekrümmtem Kanal 63b ausgebildet ist, wobei Objekte in der Ringnut 11 des Beschleunigerrads beschleunigt und über eine Transferstrecke 76a zu einer Aufnahmestrecke 76 an einer Übernahmevorrichtung, die als Einlegerad 71 ausgebildet ist, überführt werden.

Das Einlegerad 71 mit den diskreten Objektaufnahmen 72 rotiert in Pfeilrichtung. Wie in dem Ausführungsbeispiel in Fig. 4 wird auch in dem Beispiel gemäß Fig. 5 eine Objektkette von der Ringnut 11 des Beschleunigerrads 10 in die als Kanal ausgebildete Aufnahmestrecke 76 überführt und dort an den Objektaufnahmen 72 des Einlegerads 71 vorbei geführt, das in die Objektaufnahmen 72 aufgenommene Objekte in einer Einlegezone 78 in einen Materialstrang 1 eingelegt werden.

Im Unterschied zu dem Ausführungsbeispiel gemäß Fig. 4 schließt sich an die Aufnahmestrecke 76 am Einlegerad 71 in Fig. 5 ein Abstreifkeil 75 an, der die überschüssigen Objekte zu einem zweiten Beschleunigerrad 10" umlenkt, wobei diese Objekte in die Ringnut 11 des zweiten Beschleunigerrads 10" aufgenommen werden und wiederum in Pfeilrichtung beschleunigt werden. Dabei bildet das Gehäuse 65 um das zweite Beschleunigerrad 10" herum eine Rückführstrecke 77 aus, bzw. die Rückführstrecke 77 ist als Abschnitt der Ringnut 11 des zweiten Beschleunigerrads 10" ausgebildet. Die darin wiederum beschleunigten Objekte werden durch einen zweiten Abstreifkeil 75' aus der Ringnut 11 des zweiten Beschleunigerrads 10" entnommen und durch einen Rückführkanal 79 zurück in das Objektvorratsvolumen 62 geführt, wo sie erneut in die Ringnut 11 des ersten Beschleunigerrads 10 eindringen können. Der Rückführkanal 79 ist dabei durch einen überstehenden Teil der Gehäusewand vor herabfallenden Objekten aus dem oberen Einlass des Objektvorratsvolumens 62 geschützt, so dass sich dort kein Stau an Objekten ausbildet. Stattdessen werden die von oben kommenden Objekte an der gekrümmten Wand mit dem Bezugszeichen 65' direkt in Richtung auf das erste Beschleunigerrad 10 gelenkt.

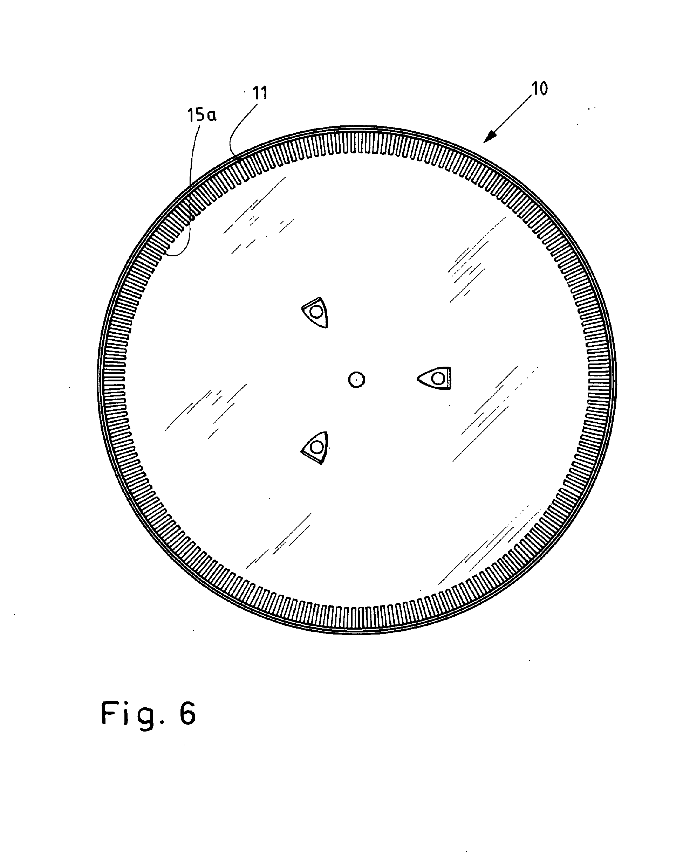

In Fig. 6 ist ein Beschleunigerrad 10 schematisch dargestellt, an dessen umfängliche Ringnut 11 sich radial nach innen verlaufende Kanäle 15a anschließen. Diese sorgen dafür, dass die an der Ringnut 11 anliegende Saugluft unabhängig davon, an welcher Stelle der Ringnut 11 sich Objekte befinden, gleichmäßig und ohne Verwirbelungen von außen durch die Ringnut 11 nach innen in das Beschleunigerrad 10 gelangt. Damit wird das Mitnahmeverhalten für die Objekte noch einmal verbessert. Die in Fig. 6 radial angeordneten Kanäle 15a können auch stattdessen gegenüber der Radialen geneigt sein.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Materialstrang
- 2: Materialstrang mit Objekten
- 9: Objekt
- 9a: Objektkette
- 10 - 10": Beschleunigerrad
- 11: Ringnut
- 12, 13: Scheibe
- 14: Radkörper
- 15: Spalt
- 15a: radialer Kanal
- 16: Bohrung
- 17: Saugluft
- 18: Steuerkörper
- 19: Drehrichtung
- 20: Vereinzelungs- und Einlegevorrichtung
- 21: Vereinzelungsvorrichtung
- 22: Objektvorratsvolumen
- 23: Ausbuchtung
- 24: Abstreifkeil
- 25: Gehäuse
- 26: oberer Einlass
- 30: Übernahmevorrichtung
- 31: Einlegeband
- 31 a: Förderrichtung des Einlegebands
- 32: Objektaufnahmen
- 33, 34: Umlenkrolle
- 35: Unterdruckbereich
- 36: Aufnahmestrecke
- 36a: Transferstrecke
- 37: Ende der Aufnahmestrecke
- 38: Einlegezone
- 40: Vereinzelungs- und Einlegevorrichtung
- 41: Vereinzelungsvorrichtung
- 42: Objektvorratsvolumen
- 43: Ausbuchtung
- 43a: inselförmige Sperrfläche
- 43b: gekrümmter Kanal
- 44: Abstreifkeil
- 45: Gehäuse
- 46: oberer Einlass
- 50: Übernahmevorrichtung
- 51: Einlegerad
- 52: Objektaufnahmen
- 55, 55': Abstreifkeil
- 56: Aufnahmestrecke
- 56a: Transferstrecke
- 57: Abführkanal
- 58: Einlegezone
- 60: Vereinzelungs- und Einlegevorrichtung
- 61: Vereinzelungsvorrichtung
- 62: Objektvorratsvolumen
- 63: Ausbuchtung
- 63a: inselförmige Sperrfläche
- 63b: gekrümmter Kanal
- 64: Abstreifkeil
- 65: Gehäuse
- 66: oberer Einlass
- 70: Übernahmevorrichtung
- 71: Einlegerad
- 72: Objektaufnahmen
- 75, 75': Abstreifkeil
- 76: Aufnahmestrecke
- 76a: Transferstrecke
- 77: Rückführstrecke
- 78: Einlegezone
- 79: Rückführkanal

## Patentansprüche

1. Verfahren zum Vereinzeln und Einlegen von Objekten (9) in wenigstens einen Materialstrang (1) der Tabak verarbeitenden Industrie, insbesondere einen Filterstrang, wobei Objekte (9) aus einem Objektvorratsvolumen (22, 42, 62) in eine mit Saugluft (17) beaufschlagte Ringnut (11) am äußeren Umfang eines um eine Rotationsachse rotierenden Beschleunigerrads (10, 10') gelangen, wobei die Objekte (9), die durch die Saugluft (17) in der Ringnut (11) des Beschleunigerrads (10, 10') gehalten werden, im Laufe der Rotation des Beschleunigerrads (10, 10') beschleunigt werden und auf eine Übernahmevorrichtung (30, 50, 70) gefördert werden, die diskrete Objektaufnahmen (32, 52, 72) für die Objekte (9) aufweist, wobei einige der Objekte (9) in einer Aufnahmestrecke (36, 56, 76) entlang des Förderwegs der Objekte (9) in den Objektaufnahmen (32, 52, 72) der Übernahmevorrichtung (30, 50, 70) aufgenommen, nach Verlassen der Aufnahmestrecke (36, 56, 76) in den Objektaufnahmen (32, 52, 72) weitergefördert und anschließend durch die Übernahmevorrichtung (30, 50, 70) oder eine in Förderrichtung der Objekte (9) stromabwärts sich anschließende Einlegevorrichtung in einen Materialstrang (1) eingelegt werden, wobei überschüssige Objekte (9), die in der Aufnahmestrecke (36, 56, 76) nicht in einer Objektaufnahme (32, 52, 72) der Übernahmevorrichtung (30, 50, 70) aufgenommen worden sind, nach Verlassen der Aufnahmestrecke (36, 56, 76) abgeführt und/oder in das Objektvorratsvolumen (22, 42, 62) zurückgeführt werden.

2. Verfahren nach Anspruch 1, **dadurch gekennzeichnet, dass** die Objekte (9) auf dem Beschleunigerrad (10, 10') auf eine Geschwindigkeit beschleunigt werden, die die Fördergeschwindigkeit der Übernahmevorrichtung (30, 50, 70) übersteigt.

3. Verfahren nach Anspruch 1 oder 2, **dadurch gekennzeichnet, dass** ein Überschuss an Objekten (9) zur Übernahmevorrichtung (30, 50, 70) gefördert wird, wobei insbesondere die überschüssigen Objekte (9) mittels eines zweiten Beschleunigerrades (10") mit einer mit Saugluft beaufschlagten Ringnut (11), das sich an die Übernahmevorrichtung (70) anschließt, zum Objektvorratsvolumen (62) zurückgeführt wird.

4. Verfahren nach einem der Ansprüche 1 bis 3, **dadurch gekennzeichnet, dass** bei dem Beschleunigerrad (10, 10', 10") die Saugluft (17) entlang eines Teils des Umfangs in Rotationsrichtung abgeschaltet wird, insbesondere zwischen einem Übergabepunkt an die Übernahmevorrichtung (30, 50, 70) und einem Punkt, an dem die Ringnut (11) in das Objektvorratsvolumen (22, 42, 62) eindringt.

5. Vorrichtung (20, 40, 60) zum Vereinzeln und Einlegen von Objekten (9) in wenigstens einen Materialstrang (1) der Tabak verarbeitenden Industrie, insbesondere einen Filterstrang, umfassend ein Objektvorratsvolumen (22, 42, 62) und eine Übernahmevorrichtung (30, 50, 70) mit diskreten Objektaufnahmen (32, 52, 72) für Objekte (9), wobei eine Aufnahmestrecke (36, 56, 76) entlang des Förderwegs der Objekte (9) an der Übernahmevorrichtung (30, 50, 70) zur Aufnahme der Objekte (9) in den Objektaufnahmen (32, 52, 72) angeordnet ist, wobei die Übernahmevorrichtung (30, 50, 70) zum Einlegen von Objekten (9) in den Materialstrang (1) ausgebildet ist oder zusätzlich eine Einlegevorrichtung zum Einlegen von Objekten (9) in den Materialstrang (1) umfasst ist, die unmittelbar oder mittelbar in Förderrichtung der Objekte (9) stromabwärts der Übernahmevorrichtung (30, 50, 70) angeordnet ist, **dadurch gekennzeichnet, dass** ein drehendes oder drehbares Beschleunigerrad (10, 10') zwischen dem Objektvorratsvolumen (22, 42, 62) und der Übernahmevorrichtung (30, 50, 70) angeordnet ist, das an seinem Umfang eine mit Saugluft (17) beaufschlagte oder beaufschlagbare Ringnut (11) aufweist, deren Breite nicht oder nur geringfügig größer ist als ein Durchmesser der Objekte (9).

6. Vorrichtung (20, 40, 60) nach Anspruch 5, **dadurch gekennzeichnet, dass** die Ringnut (11) in ihrer Tiefe einem Durchmesser eines Objekts (9) entspricht und/oder die Breite des Objektvorratsvolumens (22, 42, 62) einem Durchmesser eines Objekts (9) entspricht, wobei insbesondere die Seitenwände des Objektvorratsvolumens (22, 42, 62) mit den Seitenwänden der Ringnut (11) fluchten.

7. Vorrichtung (20, 40, 60) nach Anspruch 5 oder 6, **dadurch gekennzeichnet, dass** die Übernahmevorrichtung (30, 50, 70) als Übernahmeband oder Einlegeband (31) oder als Übernahmerad oder Einlegerad (51, 71) ausgebildet ist.

8. Vorrichtung (60) nach einem der Ansprüche 5 bis 7, **dadurch gekennzeichnet, dass** sich an die Übernahmevorrichtung (70) in Förderrichtung der Objekte (9) ein zweites Beschleunigerrad (10") anschließt, mittels dessen überschüssige Objekte (9) in das Objektvorratsvolumen (62) rückführbar sind.

9. Vorrichtung (20, 40, 60) nach einem der Ansprüche 5 bis 8, **dadurch gekennzeichnet, dass** das Beschleunigerrad (10, 10") oder die Beschleunigerräder (10, 10") zwei Scheiben (12, 13) aufweist oder aufweisen, zwischen denen ein Spalt (15) und/oder radial ausgerichtete oder gegenüber einer Radialen geneigte Kanäle (15a) für Saugluft (17) ausgebildet ist und/oder sind, wobei die Scheiben (12, 13) an ihrem Umfang jeweils einen seitlichen Teil der Ringnut (11) aufweisen, wobei insbesondere ein in den Spalt (15) zwischen den Scheiben (12, 13) eingreifender stillstehender Steuerkörper (18) zur Abschaltung der Saugluft (17) und/oder zur Entnahme der Objekte (9) aus der Ringnut (11) angeordnet ist.

10. Vorrichtung (20, 40, 60) nach einem der Ansprüche 5 bis 9, **dadurch gekennzeichnet, dass** das Beschleunigerrad (10') an einer oder beiden Seitenflächen Öffnungen (16) aufweist, die mit einer entsprechenden stillstehenden, insbesondere ringabschnittförmigen, Saugluftdüse fluchten und im Inneren des Beschleunigerrads (10') mit der Ringnut (11) verbunden sind.

11. Vorrichtung (20, 40, 60) nach einem der Ansprüche 5 bis 10, **dadurch gekennzeichnet, dass** eine Seitenwand des Objektvorratsvolumens (22, 42, 62) am Austritt des Beschleunigerrads (10, 10') aus dem Objektvorratsvolumen (22, 42, 62) abschnittsweise keilförmig zum Abstreifen von außerhalb der Ringnut (11) mitgenommenen Objekten (9) ausgebildet ist, wobei die Seitenwand an der vom Beschleunigerrad (10, 10') abgewandten Seite des keilförmigen Abschnitts (22, 42, 62) eine Ausbuchtung (23, 43, 63) aufweist, mittels der die abgestreiften Objekte (9) in das Objektvorratsvolumen (22, 42, 62) zurück gelenkt werden oder lenkbar sind, wobei insbesondere die Ausbuchtung (43, 63) in ihrem Zentrum eine inselförmige Sperrfläche (43a, 63a) aufweist, so dass um die Sperrfläche (43a, 63a) herum ein gekrümmter Kanal (43b, 63b) für die Objekte (9) in der Ausbuchtung (43, 63) ausgebildet ist.

12. Vorrichtung (20, 40, 60) nach einem der Ansprüche 5 bis 11, **dadurch gekennzeichnet, dass** das Beschleunigerrad (10, 10') zwischen dem Objektvorratsvolumen (22, 42, 62) und einer Übergabeposition zur Übernahmevorrichtung (30, 50, 70) in einem Gehäuse (25, 45, 65) angeordnet ist, das so dicht am Umfang des Beschleunigerrads (10, 10') angeordnet ist, dass Objekte (9) die Ringnut (11) nicht verlassen können.

13. Vorrichtung (20, 40, 60) nach einem der Ansprüche 5 bis 12, **dadurch gekennzeichnet, dass** die Geschwindigkeit des Beschleunigerrads (10 - 10") oder der Beschleunigerräder (10 - 10") regelbar ist.

14. Maschine der Tabak verarbeitenden Industrie, insbesondere Strangmaschine, mit einer oder mehreren Vorrichtungen (20, 40, 60) nach einem der Ansprüche 5 bis 13 für einen oder mehrere Materialstränge (1), insbesondere Filterstränge.

15. Verwendung eines Beschleunigerrads (10 - 10") mit einer mit Saugluft (17) beaufschlagbaren Ringnut (11) an ihrem Umfang zum Beschleunigen von Objekten (9) aus einem Objektvorratsvolumen (22, 42, 62) und zum Fördern eines Überschusses an Objekten (9), insbesondere unter Bildung einer Objektkette, zu einer Übernahmevorrichtung (30, 50, 70) mit diskreten Aufnahmen (32, 52, 72) für Objekte (9).
